# EUROPEAN PATENT APPLICATION

(11) **EP 2 073 515 A1**
(43) Date of publication of application: **24.06.2009**
(21) Application number: 07024942.0
(22) Date of filing: 21.12.2007
(51) Int. Cl.: H04M 1/725

(54) **Identification of proximate mobile devices**

(71) Applicant: Koninklijke KPN N.V., 2516 CK The Hague (NL); Nederlandse Centrale Organisatie Voor Toegepast Natuurwetenschappelijk Onderzoek TNO, 2628 VK Delft (NL)
(72) Inventor: Van Deventer, Mattys Oskar, 2264 DL Leidschendam (NL); Jager, Edsger Jan, 2611 TH Delft (TH); Selgert, Franklin, 2651 BL Berkel en Rodenrijs (NL)
(74) Representative: Wuyts, Koenraad Maria

(57) **Abstract**

A method for a first mobile device (1) to identify a second mobile device (2). The method comprises a) detecting at least one sensory identifier (ID1), and b) determining a stamp for each detected sensory identifier (ID1). The method further comprises c) searching for a second mobile device 2 via a first communication channel and d)opening a first communication channel. Furthermore e) exchanging parts of the at least one stamp with the second mobile device 2 and f) verifying received parts of the at least one stamp. Finally the method comprises g) opening a second communication channel between the first mobile device 1 and the second mobile device 2 if a predetermined amount of the received parts of the at least one stamp equal the corresponding parts of the at least one stamp as determined by the first mobile device 1.

## Description

The present invention relates to a method for a first mobile device. The invention further relates to such a method to identify a second mobile device (2), a mobile device, a system comprising such mobile devices a computer program and a computer-readable medium product.

The application further relates to the identification of proximate mobile devices. More in particular, the present invention relates to a method of identifying proximate mobile devices, and to a mobile device capable of identifying other mobile devices located in its spatial proximity.

Mobile devices, such as mobile (cellular) telephones, PDAs (Personal Digital Assistants) and laptop computers, increasingly have multiple functions. Modem mobile telephones, for example, are not only suitable for making telephone calls but often also include a calculator, a calendar, and even games. Mobile phone games are typically designed for a single player, involving only the mobile device they are played on. However, some types of games require multiple players, each player using his/her own device. Before a multiple player game can begin, the players have to be selected and, accordingly, their mobile devices have to be identified.

It is possible to identify other mobile devices using a stored phone list containing the telephone numbers of other mobile devices and the respective names of their owners. However, the phone list contains no information regarding the availability and proximity of the other mobile devices. If a multiple player game is to be played with a group of players who are located in each other's vicinity, for example within viewing distance, the mobile devices of that group have to be identified in another way. Of course it is possible to manually enter the telephone numbers of participating mobile devices, if these numbers are known. However, this is cumbersome and prone to errors, in particular when the telephone numbers have to be read aloud. Accordingly, there is a need for a simple yet effective identification mechanism for mobile devices located in each other's vicinity.

Such an identification mechanism can also be used in mobile devices other than mobile telephones, for example in PDAs, laptop computers and so-called notebook computers. An identification mechanism may not only be used in gaming applications, as PDAs and similar devices may in general need to identify other devices in order to initiate a transaction between the devices. An example of a transaction is exchanging information, such as data files, calendar appointments, and other information.

The identification mechanism would primarily be used for mobile devices which are located in each other's vicinity, as remote devices would not likely be involved in a multiple player game or data exchange. In particular, it is often desired to invite (the owner of) a mobile device to join a game or to exchange calendar data when (the owner of) the mobile device is in view. For the invited mobile device to join the game or exchange data, it first has to be identified. Accordingly, there is a need to identify proximate mobile devices. Although determining the proximity of (mobile) devices is well known, the Prior Art fails to suggest a solution to the identification problem.

International Patent Application WO 2005/103862 (Motorola), for example, discloses a handheld electronic device which includes a context sensing circuit and a microprocessor. The context sensing circuit is capable of detecting contextual characteristics of the device, such as motion of the device or proximity to or contact with another object. The detected contextual characteristics are used to display a virtual physical representation, for example indicating the angle of the device relative to the horizon. A touch sensor is activated by contact with or close proximity to a foreign object, such as the user, and may be used to determine how the device is held by the user. An infra-red (IR) sensor may be used to sense proximity to other objects, including the user's body. These sensors only provide information regarding the presence of other objects, not regarding their identity.

United States Patent Application US 2002/0021278 (Hinckley et al.) discloses a device in which context values are derived from sensors. A proximity sensor uses infra-red (IR) light to detect the proximity of other objects. The proximity sensor includes an IR transmitter and an IR receiver, the strength of the received (scattered) IR light is assumed to be proportional to the distance to the other object. Again, this known proximity sensor is not used to provide information concerning the identity of proximate objects.

Some Prior Art devices are capable of reading information instead of determining the proximity of other objects. For example, European Patent Application EP 1 677 512 (Sharp) discloses a mobile telephone capable of reading bar codes and taking photographs. This known device is capable of recognising bar codes representing URLs (Uniform Resource Locators, that is, Internet addresses). The bar codes displayed by this known device therefore represent entities outside the mobile telephone and are not used for identifying the mobile device itself.

It is an object of the present invention to overcome these and other problems of the Prior Art and to provide a method of identifying proximate mobile devices which is both simple and efficient, and which is preferably independent of a particular wireless communication technology used by the mobile device.

It is another object of the present invention to provide a mobile device, a server and a mobile communication system for use in such a method.

It is a further object to further improve the user-friendliness of mobile devices.

### SUMMARY

According to an embodiment there is provided a method for a first mobile device 1, comprising
a) detecting at least one sensory identifier ID1 and
   performing predetermined functionality in response to the detected sensory identifier ID 1. The sensory identifier may be one of an acoustic identifier and a visual identifier.

According to an embodiment there is provided a such a method to identify a second mobile device (2), the method comprising:
a) detecting at least one sensory identifier ID1,
b) determining a stamp for each detected sensory identifier ID1,
c) searching for a second mobile device 2 via a first communication channel and when found,
d) opening a first communication channel with the second mobile device 2,
e) exchange parts of the at least one stamp with the second mobile device 2 via the first communication channel,
f) verifying if received parts of the at least one stamp equal the corresponding parts of the at least one stamp as determined by the first mobile device 1, and
g) opening a second communication channel between the first mobile device 1 and the second mobile device 2 if a predetermined amount of the received parts of the at least one stamp equal the corresponding parts of the at least one stamp as determined by the first mobile device 1.

According to an embodiment there is provided a mobile device adapted to perform such a method.

Furthermore there is provided a system comprising at least two mobile devices 1, 2 according to the above.

Furthermore there is provided a computer program loadable into a processing unit of a mobile device, the computer program comprising portions of software code adapted to perform any one of the methods above.

Furthermore there is provided a computer-readable medium product comprising such a computer program.

### BRIEF DESCRIPTION OF THE DRAWINGS

The present invention will further be explained below with reference to exemplary embodiments illustrated in the accompanying drawings, in which:
Fig. 1 schematically shows a set of mobile devices according to the present invention.
Fig. 2 schematically shows a mobile device according to the present invention which is provided with a camera.
Fig. 3 schematically shows mobile devices according to the present invention which are provided with loudspeakers and microphones.
Fig. 4 schematically shows a data exchange between mobile devices according to the present invention.
Fig. 5 schematically shows the constituent parts of a mobile device according to the present invention.
Fig. 6 schematically shows the constituent parts of a server according to the present invention.
Fig. 7 schematically shows a flow diagram according to an embodiment.
Fig.'s 8, 9 and 10 schematically show an embodiment in more detail, and
Fig. 11 schematically shows a telephone device according to an embodiment..

### DETAILED DESCRIPTION

Accordingly, the present invention provides a method of identifying proximate mobile devices, the method comprising the steps of:
- a first mobile device presenting a sensory identifier,
- a second mobile device detecting the sensory identifier presented by the first mobile device, and
- the second mobile device verifying the detected sensory identifier so as to identify the first device.
By providing a sensory identifier which is presented by the first mobile device and detected and verified by the second mobile device, a reliable identification of the first mobile device can be made. The step of presenting may involve displaying and/or rendering the sensory identifier, while the step of detecting may involve capturing and/or recording the sensory identifier. The step of verifying may involve comparing the detected sensory identifier with a predetermined format to ensure that the detected identifier is a true identifier, and to determine its characteristics. The step of verifying may also, or alternatively, involve pattern recognition techniques which may be known *per se.*

It is noted that the term "sensory identifier" is meant to include audio identifiers, such as sound signals, visual identifiers, such as visible symbols and codes, scent identifiers, such as smells, and touch identifiers, such as Braille patterns. Accordingly, the present invention uses audio and/or visual identifiers to identify proximate mobile devices.

Advantageously, the method of the present invention may further comprise the step of:
- the second mobile device, after verifying the detected sensory identifier, sending an acknowledgement message to the first mobile device.
That is, after the second mobile device has determined that the detected sensory identifier is a valid identifier, it sends a acknowledgement to the first mobile device. In this way, the first mobile device "knows" that its identity has been received by the first mobile device. This acknowledgement is advantageous but not essential.

In a preferred embodiment, the method according to the present invention further comprises the steps of:
- the second mobile device presenting a further sensory identifier,
- the first mobile device detecting the further sensory identifier presented by the second mobile device, and
- the first mobile device verifying the detected further sensory identifier so as to mutually identify the mobile devices.
By providing a further (that is, second) sensory identifier which is presented by the second mobile device and detected and verified by the first mobile device, a reliable identification of the second mobile device can be carried out. The second (further) sensory identifier may be similar to the first sensory identifier, but this is not necessary. For example, the first sensory identifier may be visual while the second sensory identifier is an audio identifier, or vice versa.

The method according to the present invention may further comprise the step of:
- the first mobile device, after verifying the detected further sensory identifier, sending a further acknowledgement message to the second mobile device.
   By using a further (that is, second) acknowledgement message the first mobile device "knows" that the second mobile device has received its identifier.

The step of verifying a detected sensory identifier (ID1, ID2) may involve a server. Accordingly, the verification step may not be carried out by the mobile device which detected the sensory identifier but by a server to which the detected sensory identifier is forwarded by the mobile device concerned. When the verification is successful, a verification confirmation message may be transmitted from the server to the mobile device from which the detected sensory identifier originated. In such embodiments, the step of verifying is therefore carried out via a server.

As mentioned above, the sensory identifier and/or the further sensory identifier may comprise a visual identifier, such as a bar code or a symbol. Such a visual identifier may be located on a sticker or label affixed to the mobile device to be identified. Alternatively, a visual identifier may be provided by a blinking pattern shown by a display screen, the blinking frequency and/or intervals containing identification information. Accordingly, the visual identifier may be constituted by a spatial and/or temporal pattern, for example produced by a display (such as the display of a mobile device) or a light (such as a light built into a mobile device).

The sensory identifier and/or the further sensory identifier may alternatively, or additionally, comprise an audio identifier, such as a sound signal. The audio identifier may be rendered by a loudspeaker of a mobile device, or may be produced by a percussive element external to the mobile device, such as a drum or a tuning fork. Alternatively, or additionally, the audio identifier may be produced by clapping hands or by tapping the mobile devices together. The sensory identifier may be accompanied by a time stamp. This allows sensory identifiers from multiple sources to be distinguished.

The method of the present invention is not limited to two mobile devices. Accordingly, an advantageous embodiment of the inventive method further comprises the steps of:
- a third mobile device detecting the sensory identifier presented by the first mobile device, and
- the third mobile device verifying the detected sensory identifier so as to identify the first device.
   The sensory identifier presented by the first mobile device to the third mobile device may be identical to the sensory identifier presented by the first mobile device to the second mobile device, but this is not necessary and said sensory identifiers may be different.

This embodiment may further comprise the step of:
- the third mobile device, after verifying the detected sensory identifier, sending a still further (that is, third) acknowledgement message to the first mobile device.
Similar to previous embodiments the method may also comprise the steps of:
- the third mobile device presenting a still further (that is, third) sensory identifier,
- the first mobile device detecting the still further sensory identifier, and
- the first mobile device verifying the detected still further sensory identifier so as to mutually identify the mobile devices.
An acknowledgement may be used also in this embodiment if the method further comprises the step of:
- the first mobile device, after verifying the detected still further sensory identifier, sending a yet further (that is, fourth) acknowledgement message to the third mobile device.
   In this way, all mobile devices involved can "know" that their identities have been received by the other mobile devices. Advantageously, the method may further comprise the step of each mobile device maintaining a list of mobile devices identified within a predetermined time period.

In a particularly advantageous embodiment, a sensory identifier presented by a mobile device represents a state of the respective mobile device. This allows the mobile devices to respond to the states of other mobile devices. In addition, a mobile device may have a state which is changed in response to a sensory identifier of another mobile device. That is, the state of a mobile device may be changed in response to the state of another device, and/or in response to an identifier of the other device.

The present invention further provides a method of pairing at least two mobile devices, the method comprising the method of identifying proximate mobile devices as defined above.

The present invention additionally provides a computer program product for carrying out the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet. The computer program product may be loaded into a mobile device used in the present invention. If a server common to the mobile devices is used, a computer program product for use in the common server may also be provided.

The present invention also provides a mobile device for use in the method defined above, the mobile device comprising:
- a display unit and/or a loudspeaker unit for presenting a sensory identifier associated with the mobile device,
- a camera unit and/or a microphone unit for detecting a sensory identifier presented by another mobile device, and
- a processor unit arranged for verifying the detected sensory identifier so as to identify the other device.
   Instead of, or in addition to a camera unit, a scanner unit may be used for scanning symbol codes, such as bar codes.

The mobile device may further be arranged for sending an acknowledgement message to another mobile device upon verification of the detected sensory identifier. Preferably, the mobile device further comprises a memory unit for maintaining a list of mobile devices identified within a predetermined time period.

In addition, the present invention provides a server for use with the method defined above and/or at least one mobile device defined above, which server comprises a processor unit for processing data, a memory unit for storing data and a communication unit for communicating with the at least one mobile device. The processor unit is preferably arranged for verifying sensory identifiers, which identifiers have been received from the at least one mobile device. The processor unit may further be arranged for producing confirmation messages in response to received acknowledgement messages. That is, any acknowledgement messages produced by the mobile devices in response to successful identifications may be forwarded to the server, which in response transmits confirmation messages to the mobile devices. In this way the server maintains a record of successful identifications and is also able to assign different roles to the various mobile devices, for example roles in different games. Accordingly, the processor of the server may be arranged for applying game rules for games involving the at least one mobile device.

In addition, the present invention provides a mobile communication system comprising a mobile device and/or a server as defined above.

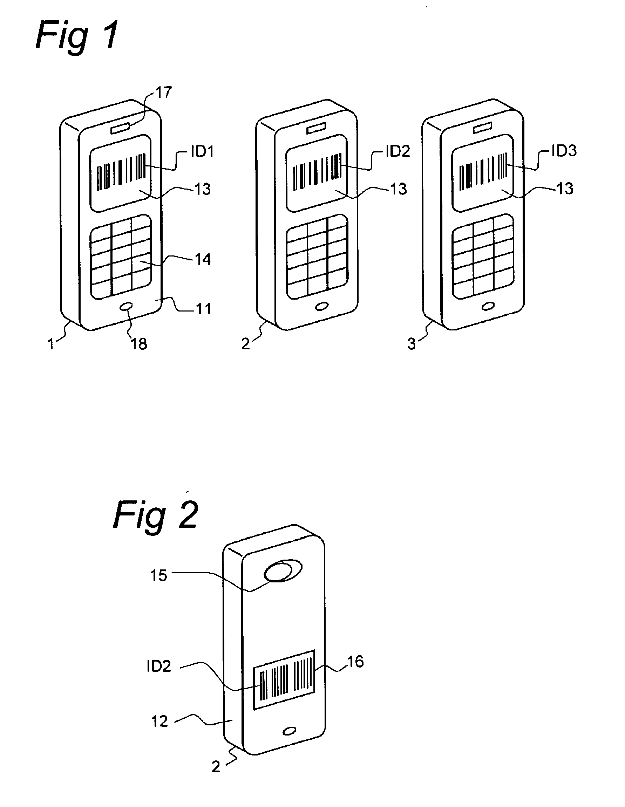

The set of mobile devices shown merely by way of non-limiting example in Fig. 1 comprises a first mobile device 1, a second mobile device 2 and a third mobile device 3. In the example shown, the mobile devices are mobile (cellular) telephone devices which may, however, also incorporate other functions, such as PDA (Personal Digital Assistant) functions.

Each mobile device 1, 2, 3 has a front face 11 on which a display screen 13, a keypad 14, a loudspeaker 17 and a microphone 18 are arranged. It will be understood that the loudspeaker and/or the microphone may alternatively be arranged on a side face of the device.

In accordance with embodiments, the display screen 13 is capable of displaying an identifier. The (first) identifier ID1 presented by the first mobile device 1 is, in the example shown, a bar code. This bar code may be "read" by a bar code scanner or a camera of another mobile device. Fig. 2 shows an example of a mobile device 2 which has a camera 15 mounted in its rear face 12, this camera 15 is capable of detecting the a bar code, symbol code or other visual indication representing the (first) identifier ID 1.

In accordance with embodiments, the identifier ID 1 represents an or the identity of the mobile device. This identity may be equal to a telephone number, a SIM (Subscriber Identity Module) number, a name, or another type of identity. However, in accordance with a further aspect of the present invention the identifier ID 1 may additionally, or alternatively, represent other information, such as the status of the device, or the state of a process or program being executed by the (processor of the) mobile device. This state will be referred to as the state of the mobile device but generally refers to the current stage or step in a process in which the mobile device is involved and which may be controlled and/or executed by the processor of the mobile device.

Instead of a stationary spatial pattern, such as the regular bar code shown in Fig. 1, a temporal pattern may be used, such as a blinking pattern or symbol of which the frequency and/or time intervals contain the identifying information.

In the example of Fig. 1, the visual identifier presented by each mobile device is displayed by its respective display screen 13. In the example of Fig. 2, however, a bar code representing the identifier ID2 of the second mobile device 2 is provided as a bar code which is printed on a label 16, preferably a self-adhesive label. If the mobile device 2 is provided with a camera or bar code scanner at its rear face 12, the label 16 is preferably also provided on the rear face 12. This has the advantage that the cameras of two mobile devices of which the rear faces are turned towards each other will be able to read each other's bar code simultaneously. Accordingly, a quick mutual identification can be achieved.

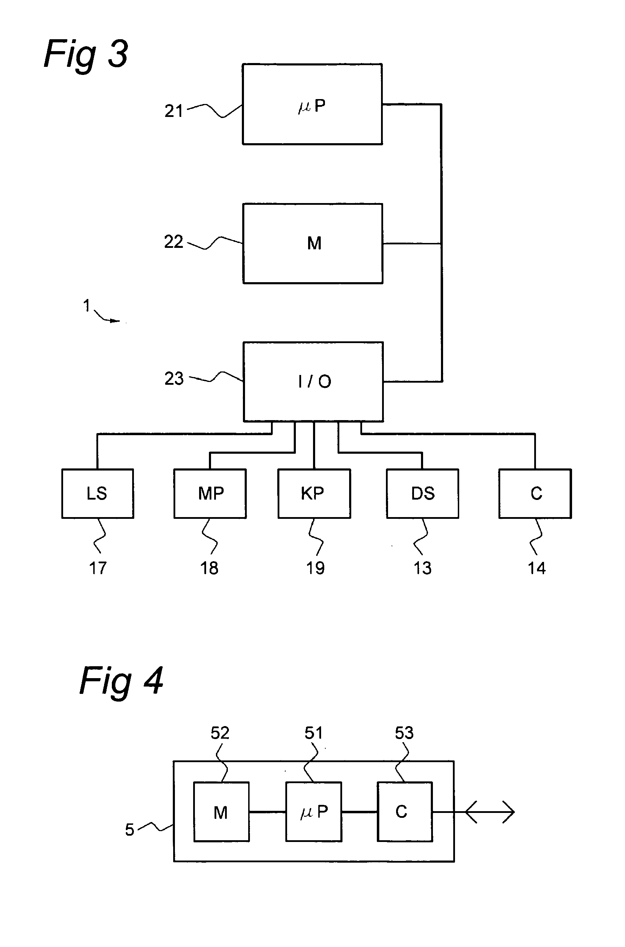

In accordance with the present invention, the identifier may also be an audio identifier. This is illustrated in Fig. 3, where the (second) identifier ID2 is produced by the loudspeaker 17 of the second mobile device 2 and received by the microphone 18 of the first mobile device 1. The identifier ID2 may be constituted by a sound signal, preferably consisting of multiple tones and/or pulses so as to be able to distinguish a plurality of different identifiers.

Alternatively, or additionally, scent identifiers and/or touch identifiers may be used. The mobile devices may, in such embodiments, be capable of producing smells which are detected by another mobile device, or may be capable of sensing the surface of another device, the sensed surface containing touch identifiers, for example Braille symbols. The present invention is therefore not limited to audio or visual identifiers.

The sensory identifiers, in the examples of Figs. 1-3 audio identifiers and visual identifiers, serve to identify the mobile devices when they are located in each other's proximity. The method of identifying serves to determine the identity of the other device, which identity may subsequently be used for exchanging information. More in particular, the method of identifying according to the present invention comprises several steps, including at least the steps of a first mobile device presenting a sensory identifier (such as a bar code or an audio signal), and of a second device detecting the sensory identifier presented by the first mobile device. To complete an actual identification, in most applications of the present invention it will be necessary to verify the detected identifier by comparing the identifier with a predetermined format, range or similar measure. Pattern recognition techniques may be used to match the detected identifier with a stored identifier format and/or to recognize the detected identifier.

Although it is possible to identify a mobile device unilaterally (that is, device 1 identifies device 2 but not vice versa), the present invention also enables a mutual identification (that is, device 1 identifies device 2 and device 2 identifies device 1). In either case, a device may require an acknowledgement when it has successfully been identified by another device. For this purpose, acknowledgement messages may be exchanged. Such messages may be similar to the sensory identifiers presented by the devices and may therefore be visual or audio messages, e.g. displayed symbols and/or rendered audio signals. However, it is not necessary for the acknowledgment messages to be similar to the identifiers. Accordingly, the acknowledgement messages may be transmitted using infra-red (IR) signals or radio frequency (RF) signals.

An exemplary identification procedure is illustrated in Fig. 4, where the exchange of information between two mobile devices 1 and 2 is schematically illustrated. The first mobile device 1 initially presents a first identifier ID1 which is detected by the second mobile device 2. Upon verification of the first identifier ID1, the second device 2 transmits a first acknowledgement message AC1 to the first device 1. The second device 2 also presents a second identifier ID2 which is detected by the first device 1. Upon verification of the second identifier ID2, the first device 1 transmits a second acknowledgement message AC2 to the second device 2. In this way, a confirmed mutual identification of the devices may be achieved. It will be understood that the scheme of Fig. 4 may readily be expanded to include more than two mobile devices.

In preferred embodiments of the present invention each mobile device stores a list of mobile devices it has identified within a certain time period. Every new identifier can then be compared with the list so as to avoid double (mutual) identifications. When a certain identifier is received for the second time, no acknowledgement is sent.

According to a first aspect of the present invention, successful identifications allow mobile devices to enter into transactions with each other. According to a further aspect of the present invention, these identifications typically alter the state of each mobile device, for example from a first state "available for gaming" into a second state "engaged in gaming". The identifiers can also be used to represent a state of the mobile device, for example the current state, in addition to or instead of representing the identity of the mobile device. The (current) state of a mobile device could be used by another mobile device to carry out a step in a process, for example sending data when the identifier of the receiving device indicates the state "ready to receive data". In this way, the identifiers can be used for carrying out a protocol. For some protocols, the actual identities of the devices involved may be irrelevant, as a result of which the identifiers may be used for identifying only the states of the devices, not their identities.

The identification techniques used in the present invention automatically select proximate devices, that is, devices located within a certain, limited range. Both visual and audio identifiers can typically only be detected within a range of a few metres, although audio identifiers may be detected from further away if the amount of background noise is limited. In this document, proximate devices are understood to include devices having a mutual distance ranging from zero or only a few millimetres to several meters or even approximately 100 meters, although larger mutual distances are not excluded and may be used in certain applications.

Sensory identifiers may be accompanied by a time stamp. For example, the moment an audio signal is produced may be registered by the transmitting device, while the moment the audio signal is received is registered by the receiving device. Advantageously, the audio signal contains an indication of the point in time at which it is transmitted, thus allowing the receiving device to quickly determine the time delay and hence the distance between the devices. The point in time at which a signal is produced may be represented by part of the identifier, for example a number of bits of a longer code.

An audio (acoustic) identifier may not only be produced by a loudspeaker, but also by other means. For example, an audio signal could be produced by tapping two mobile devices together, or by tapping one mobile device against another object, such as a table. It is also possible to produce audio identifiers by using a percussive element, for example a drum, pencil, tuning fork or similar element.

The time stamps of the audio signal will allow the receiving devices to determine from which device the sound originated. This can be achieved by broadcasting a receipt message containing the time stamp, which allows the other devices to determine whether they produced the audio identifier at that instant, or by forwarding the receipt message to a central server, if applicable. In addition to a time stamp, most audio identifiers will have characteristics (such as the time and frequency envelopes) which allow them to be distinguished from other audio identifiers and therefore make it possible to trace the identifier to a particular device. If the audio identifier is produced by tapping, it will also be received by the originating device's microphone. The characteristics detected by the receiving device may therefore be compared with the characteristics received by the originating device.

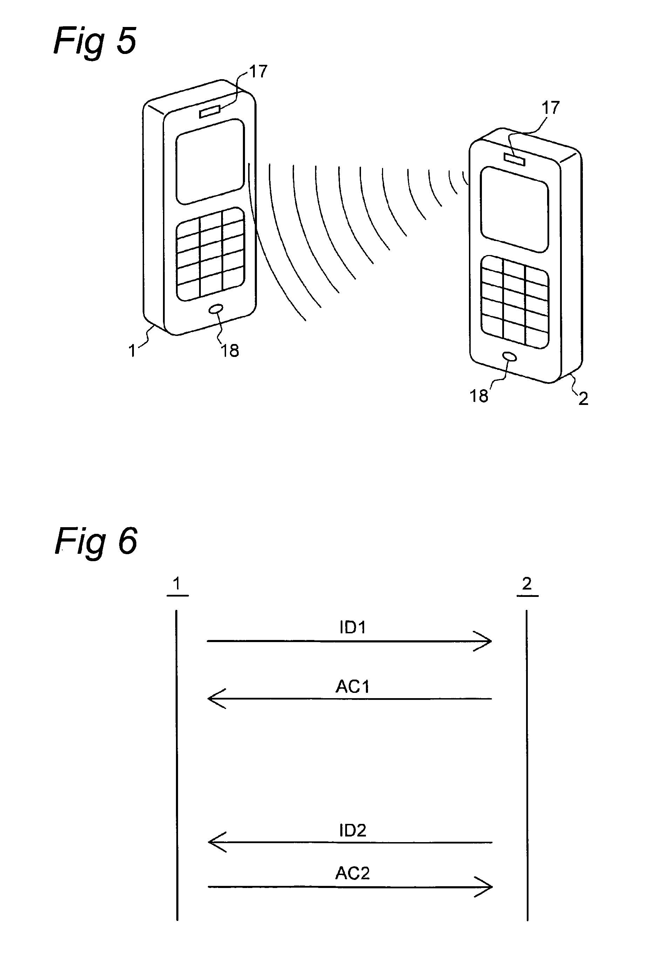

An exemplary embodiment of a mobile device according to the present invention is schematically shown in more detail in Fig. 5. The merely exemplary mobile device 1 illustrated in Fig. 5 comprises a microprocessor (µP) 21, a memory (M) 22, an input/output (I/O) unit 23, a display screen (DS) 13, a camera (C) 14, a loudspeaker (LS) 17, a microphone (MP) 18 and a keypad (KP)19. The microprocessor 21, the memory 22 and the I/O unit 23 are mutually connected by a common bus, while the display screen 13, the camera 14, the loudspeaker 17, the microphone 18 and the keypad 19 are coupled to the I/O unit 23.

The memory 22 contains suitable software programs for operating the mobile device, in particular for carrying out the identifications described above. In addition, the memory 22 may store a list of recently identified mobile devices. This list may be deleted, for example when a certain amount of time has elapsed or when the mobile device is switched off. The memory 22 may also contain a suitable software program for pattern recognition, for detecting and verifying visual identifiers, such as symbol codes.

The camera 14, which in some embodiments may be replaced with a (bar code) scanner, is capable of capturing an image of a visual identifier presented by another mobile device. Instead of a bar code or other symbol code, another visual identifier can be used, such as a picture of a face, for example the face of the mobile device's owner. The face (or another substantially unique identifier) may be displayed on the screen of the device and/or on a sticker. It will be understood that the camera may be omitted when only audio identifiers are used.

The display screen 22 may be the standard display screen present in mobile devices. However, a separate display screen could be provided for displaying an identifier. Such an additional display screen could advantageously be located on the rear face (12 in Fig. 2) of the device, so as to allow simultaneous identification of two devices. Alternatively, or additionally, one or more lights (for example LEDs or small light bulbs) could be provided on the mobile device to produce temporal and/or spatial patterns constituting visual identifiers.

As mentioned above, the present invention makes it possible to (mutually or unilaterally) identify two or more mobile devices. In fact, a whole group of devices may be identified so as to share information (for example pictures, songs, or texts) or to start a common game.

The present invention is particularly suitable for games applications. The identification of mobile devices may allow those devices to participate in games. An example of such a game is Live Stratego, where each mobile device represents a piece of the game. In such applications, the mobile devices should preferably be able to display a symbol representing the particular piece. Accordingly, the mobile devices of the present invention are preferably suitable for playing games.

The mobile devices may be handheld devices such as mobile telephones or, more in general, portable devices such as laptop computers and PDAs. Although the identification process of the present invention has been described with reference to mobile devices which essentially operate as independent units, the present invention can also be utilised in systems, such as communication systems, in which the mobile devices are partially or fully controlled by or at least communicate with a common server. Part of the identification process could therefore be carried out by such a server.

A server for use with the method and/or the mobile device defined above is schematically illustrated in Fig. 6. In the exemplary embodiment of Fig. 6, the server 5 is shown to comprise a processor (µP) unit 51 for processing data, a memory (M) unit 52 for storing data, and an input/output and communication (C) unit 53 for communicating with the at least one mobile device, preferably a plurality of mobile devices. The communication with the mobile devices may use suitable wireless technologies, such as GSM, GPRS or UMTS.

The processor unit 51 of the server 5 may be arranged for verifying sensory identifiers ID1, ID2, .... That is, the mobile device may forward any detected sensory identifiers to the server, for verification by the server. This has the advantage that it is not necessary for the mobile devices to contain suitable software and/or hardware for identification verification. Accordingly, by involving a common server in the verification process, the mobile devices can be kept relatively simple and hence inexpensive.

The processor unit 51 of the server of the present invention may be arranged for producing confirmation messages in response to acknowledgement messages received from the mobile device. These confirmation messages may be specific to a particular role of the mobile device, this role being determined by, for example, a game or other activity the mobile device is about to be involved in. The processor unit of the server may advantageously also be arranged for applying game rules for games involving the at least one mobile device.

The present invention is based upon the insight that visual and/or audio identifiers may advantageously be used to identify proximate mobile devices and/or to present a status of the mobile device.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

### Further embodiments

As explained above, sensory identifiers may be accompanied by a time stamp.

Also, an audio (acoustic) identifier may not only be produced by a loudspeaker, but also by other means. For example, an audio signal could be produced by tapping two mobile devices together, or by tapping one mobile device against another object, such as a table. It is also possible to produce audio identifiers by using a percussive element, for example a drum, pencil, tuning fork or similar element.

The time stamps of the audio signal will allow the receiving devices to determine from which device the sound originated. This can be achieved by broadcasting a receipt message containing the time stamp, which allows the other devices to determine whether they produced the audio identifier at that instant, or by forwarding the receipt message to a central server, if applicable. In addition to a time stamp, most audio identifiers will have characteristics (such as the time and frequency envelopes) which allow them to be distinguished from other audio identifiers and therefore make it possible to trace the identifier to a particular device. If the audio identifier is produced by tapping, it will also be received by the originating device's microphone. The characteristics detected by the receiving device may therefore be compared (i.e. to see if there is a match) with the characteristics received by the originating device.

To complete an actual identification, the detected identifier is compared to a predetermined format, range or similar measure. Pattern recognition techniques may be used to match the detected identifier with a stored identifier format and/or to recognize the detected identifier.

Based on this concept, below some further embodiments are provided explaining the interaction that may take place between two mobile devices. The embodiments below relate to automatic closing of transactions between two proximate devices, such as mobile devices (first mobile device 1 and second mobile device 2), for instance by tapping them against each other. The embodiments below provide a solution for the security of such transaction without the need of a trusted third party. The embodiments provide an easy, fast and secure identification of a proximate device, such as first and second mobile device, such that a third mobile device 3 is prevented from spoofing.

The embodiments comprise at least two mobile devices 1, 2 that are prepared for interaction. For instance, when two mobile devices 1, 2 detect a sensory identifier, for instance an acoustic sensory identifier produced by tapping the mobile devices 1, 2 against each other, they automatically start interacting. The interaction may comprise exchanging files, business cards, or game related information. According to an embodiment, the first and second mobile devices 1, 2 determine a stamp characterizing for the detected sensory identifier (e.g. a time stamp representing the time of the tapping detected using the microphone of the mobile devices). By comparing the stamps, the first mobile device 1 can identify the second mobile device 2 (for instance the mobile device 2 it was tapped against) and vice versa. Thus, secure interaction can be started.

According to the embodiments a detected stamp is compared to the detected stamp of another mobile device, without using a trusted third party and without revealing the stamp to the other mobile device. Of course, it needs to be ensured that both the first and second mobile devices 1, 2 have similar stamps, while a possible third mobile device 3 can not have a similar stamp. In the example provided above, wherein the sensory identifier is exchanged by tapping the first and second mobile devices 1, 2 against each other, the third mobile device 3 can not have the same stamp, as it does not detect the tap in the same way as the first and second tapping mobile devices 1, 2. For instance, in case the stamp comprises a time stamp, the third mobile device 3 detects or simulates the tap at a different moment in time, resulting in a different time stamp. Therefore, third mobile devices 3 are prevented from spoofing or eavesdropping on the interaction (such as the tapping).

From the prior art so called Public Key systems are known which enable authenticated and eavesdropping proof communication between two parties. However, public-key systems assume a trusted third party, where the need for a trusted third party is overcome by the embodiments below.

Further known from the prior art are so called Hash Functions which provide a digital fingerprint of a document or computer file. This allows one to quickly confirm that two documents are the same, or that an original document has not been tampered with. Hash functions are one-way. It is not possible to derive the original document or file from its hash function, provided the original document or file is sufficiently large. The embodiments provided below are also applicable to situations wherein this criterion is not met (small documents).

According to an embodiment, there is provided a method for a first mobile device 1 to identify a second mobile device 2, the method comprising:
a) detecting at least one sensory identifier (ID1),
b) determining a stamp for each detected sensory identifier (ID1),
c) searching for a second mobile device 2 via a first communication channel and when found,
d) opening a first communication channel with the second mobile device 2,
e) exchange parts of the at least one stamp with the second mobile device 2 via the first communication channel,
f) verifying if received parts of the at least one stamp equal the corresponding parts of the at least one stamp as determined by the first mobile device 1, and
g) opening a second communication channel between the first mobile device 1 and the second mobile device 2 if a predetermined amount of the received parts of the at least one stamp equal the corresponding parts of the at least one stamp as determined by the first mobile device 1.

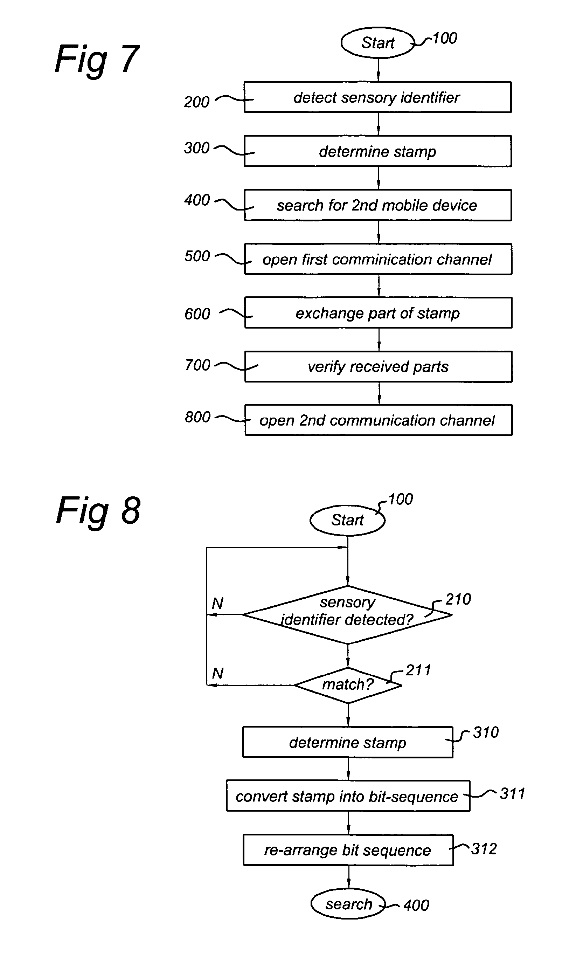

This embodiment is further explained with reference to Fig. 7. It will be understood that the embodiment may be performed by a mobile device as explained above with reference to Fig. 5. The memory (M) 22 may comprise programming lines and instructions readable and executable by the microprocessor (µP) 21 to perform for instance the flow diagram as explained below with reference to Fig. 7.

It is to be noted that the second communication channel may in fact be the same as the first communication channel. Both first and second communication channels may be a short range communication channel such as Bluetooth, wifi. The first communication channel may refer to an opening session in which identifications etc. may be exchanged without allowing full access to the respective mobile devices. The second communication channel may refer to a further phase in which both mobile devices allow each other further access, in which data can be exchanged, such as telephone numbers, business cards, images, music files etc.

The second mobile device 2 may be a proximate mobile device. This provides a solution for establishing a connection with a nearby second mobile device 2 for instance to open a short range communication channel, such as Bluetooth. This may be of particular use in game situations. The provided method does not involve cumbersome exchanging of passwords.

After start of the flow diagram in action 100, the first mobile device 1 may be arranged to detect at least one sensory identifier (ID1) in a second action 200.

As indicated above, the sensory identifier is meant to include all kinds of sensory identifiers, such as sound signals, visual identifiers, such as visible symbols and codes and touch identifiers, such as Braille patterns. Accordingly, the audio and/or visual identifiers are used to identify mobile devices. Depending on what kind of sensory identifier is used, the first mobile device 1 may have hardware and/or software arranged for detecting such sensory identifiers.

For instance, in case the sensory identifier is an acoustic (audio) identifier produced by tapping the first mobile device 1 to a second mobile device 2 (or vice versa), the first mobile device 1 may have a software function arranged to 'listen' to the acoustic information detected by the microphone of the first mobile device 1, which analyses the acoustic information and compares it to predetermined acoustic parameters to distinguish a 'tap' from other acoustic information. The first mobile device 1 may use pattern recognition techniques to do this.

Of course, in case other sensory identifiers are used, other suitable hardware and/or software functions may be provided. In case a visual sensory identifier is used, the hardware may be a camera or a scanner, and the software may comprise suitable pattern recognition techniques.

According to an embodiment, the at least one sensory identifier is produced by the first mobile device 1. In case the sensory identifier is a visual sensory identifier (e.g. a flash), it may be produced by the first or second mobile device 1, 2 involved in the interaction. Also, in case the sensory identifier is an acoustic identifier, one of the first and second mobile devices 1, 2 involved in the interaction may generate the acoustic identifier by producing an acoustic (audio) signal. If the sensory identifier is produced by the first mobile device 1, action 200 of detecting the sensory identifier may comprise detecting that an instruction for producing a sensory identifier is (to be) processed by the microprocessor 21. The at least one sensory identifier may be produced initiated by user interaction.

According to an alternative, the at least one sensory identifier is produced by a third party. This third party may for instance be a user of the first or second mobile device 1, 2 who claps his/her hands or uses a percussive element, for example a drum, pencil, tuning fork or similar element, or induces a light flash.

If at least one sensory identifier is detected, a stamp may be determined based on each detected sensory identifier ID1 in a next action 300.

According to an embodiment, the stamp comprises a time stamp based on the time the at least one sensory identifier ID 1 is detected. In this case, the time may be determined using a clock comprised by or accessible by the first mobile device 1.

If the stamp comprises a time stamp, the at least one sensory identifier may be an identifier that is detected at substantially the same time by the first mobile device 1 as the second mobile device 2. As both the mobile devices 1, 2 detect the sensory identifier at substantially the same time, the time stamp can be used to make sure that a connection is set up with the intended second mobile device 2. The time stamp is a secret, i.e. is not known by a third mobile device 3 and may be used by the first and second mobile device 1, 2 to set up a secure connection.

The sensory identifier is such that it is detected at a different time by a third mobile device 3, for instance because the third mobile device 3 is at a different position. The first mobile device 1 is arranged to detect such a sensory identifier. Where the sensory identifier ID1 is generated by tapping the mobile devices 1, 2 against each other, the third mobile device 3 will practically not be able to generate a tap at exactly the same time, and will therefore not be able to successfully go through the rest of the flow diagram as further explained below.

According to an embodiment the time stamp is determined by using clock information from at least one of: clock of the first mobile device 1, network clock of a provider associated with the first mobile device 1, positioning system.

When determining a time stamp, the first mobile device 1 may obtain clock information from its internal clock as present in most mobile devices (not shown). According to an embodiment, the internal clocks are of a high quality, to ensure that both the first and second mobile device 1, 2 determine a similar time stamp. The internal clock may for instance be an atomic clock.

According to an alternative the first mobile device 1 obtains clock information from a provider via a mobile network. This network clock information may be obtained when a sensory identifier is detected or may be used to synchronize the internal clock of the first mobile device 1.

As an alternative to obtaining clock information from the network, clock information may also be obtained from an independent clock synchronization network. A radio clock is a clock that is synchronized by a time code bit stream transmitted by a radio transmitter connected to a time standard such as an atomic clock. Also positioning system, such as the GPS network or any alternative positioning system can be used as clock synchronization network. If the first mobile device 1 comprises or has access to a positioning system, accurate clock information is available, as will be understood by a skilled person.

As an alternative, the first mobile device 1 and the second mobile device 2 can mutually synchronise their clocks as part of their interaction.

According to an embodiment, the sensory identifier may comprise an acoustic (audio) identifier. According to this embodiment, the first mobile device 1 is arranged to detect such an acoustic identifier, for instance by using microphone 18 as described above. The acoustic identifier may be a predetermined acoustic signal (special beep or the like) that is produced by the first or second mobile device 1, 2. The acoustic sound signal may not be too loud, to reduce the possibility that a third mobile device 3 eavesdrops the acoustic signal.

Also when the two mobile devices 1, 2 are tapped against each other, an acoustic (audio) identifier is generated.

As will be understood based on the above, the sensory identifier may be generated by tapping the first and second mobile telephone 1, 2 to each other. This is an advantageous embodiment as tapping the mobile devices 1, 2 to each other (i.e. first against second or vice versa) ensures that both mobile devices 1, 2 have a similar or even identical time stamp, while at the same time it is made very difficult for a third mobile device 3 to obtain a similar time stamp. Also, users can make sure to tap the right mobile device, so fraud is made more difficult.

The tapping may be detected by using all sorts of techniques. The first and/or second mobile devices 1, 2 may comprise an acceleration measurement device to detect a tap. Also, the first and/or second mobile devices 1, 2 may comprise a microphone and suitable software to detect a tap by analysing sound detected by the microphone. According to an alternative, the first and/or second mobile device 1, 2 may comprise at least one of: a button, galvanic sensor, magnetic sensor, inductive sensor, electrostatic sensor to detect a tap. Of course, the second and/or first mobile device 2, 1 may at the same time be arranged to trigger the sensor of the other mobile device, and may for instance comprise a magnet to trigger the magnetic sensor.

According to an embodiment, the sensory identifier may comprise a visual identifier. The visual identifier may for instance be generated by the first or second mobile device 1, 2 using a built in laser pointer, or using a flash of a camera integrated in the mobile device 1, 2, or by flashing the display of the mobile device 1, 2.

If the visual identifier is generated by one of first or second mobile device 1,2 it may be such that it is received at substantially the same time by the other mobile device, so a time stamp may be used.

According to an embodiment the stamp may further comprise fingerprint information of the sensory identifier.

This fingerprint information may be all kinds of information or parameters that are based on the sensory identifier, for instance being representative for the shape of the sensory identifier.

According to an embodiment the sensory identifier is an acoustic identifier and the stamp comprises an acoustic fingerprint. The acoustic fingerprint may be formed by parameters describing an envelope of the acoustic signal as detected by the microphone 18. The acoustic fingerprint may also comprise Fourier coefficients describing the acoustic signal as detected by the microphone 18.

The acoustic fingerprint may also comprise information about echoes, ambient sound information such as the level of the background noise etc.

Such an acoustic fingerprint may be made based on an acoustic signal generated by tapping the mobile device 1, 2 against each other.

According to an embodiment the sensory identifier is a visual identifier and the stamp comprises a visual fingerprint. The visual fingerprint may be formed by parameters describing an envelope of the visual signal as detected by the camera or scanner. The visual fingerprint may also comprise Fourier coefficients describing the visual signal as detected by an optical sensor, such as for instance a camera. When making a visual fingerprint, known pattern recognition techniques may be used.

The stamp may comprise at least one of the group comprising: acoustic stamp, visual stamp, time stamp.

Actions 200 and 300 are further explained below with reference to Fig. 8

In a next action 400, the first mobile device 1 searches for at least a second mobile device 2 and when found, opens a first communication channel with the second mobile device in action 500 via the first communication channel. Of course, more than one second mobile device 2 may be found. Below it is explained how the second mobile device 2 communication is intended which is selected.

According to an embodiment, the first communication channel may be a direct communication channel, e.g. a radio communication channel based on Bluetooth or computer-to-computer wifi technology. The setting up of such a communication channel is a multi-step process, in which device discovery may be performed to identify proximate devices, in which pass keys may be exchanged using a first communication channel to perform mutual identification, and in which a second communication channel may be set up to achieve partial or full access between the mobile devices.

Action 400 or 500 (also referred to as actions c) and d)) may comprise waiting a random time. This random time may for instance vary between 0 - 1000 ms. The first mobile device 1 may be arranged to wait a random time before opening the first communication channel in action 500 (or actions c) or d) as defined above). This is to further increase the security. If the first mobile device 1 would not be arranged to wait a random time, but would start at a fixed time after detecting the at least one sensory identifier, a third mobile device 3 could gain knowledge about this fixed time and use this to compute the time stamp as determined by the first mobile device 1.

Increasing the maximum allowable random time further increases the security of the method.

Decreasing the maximum allowable random time ensures faster execution of the method.

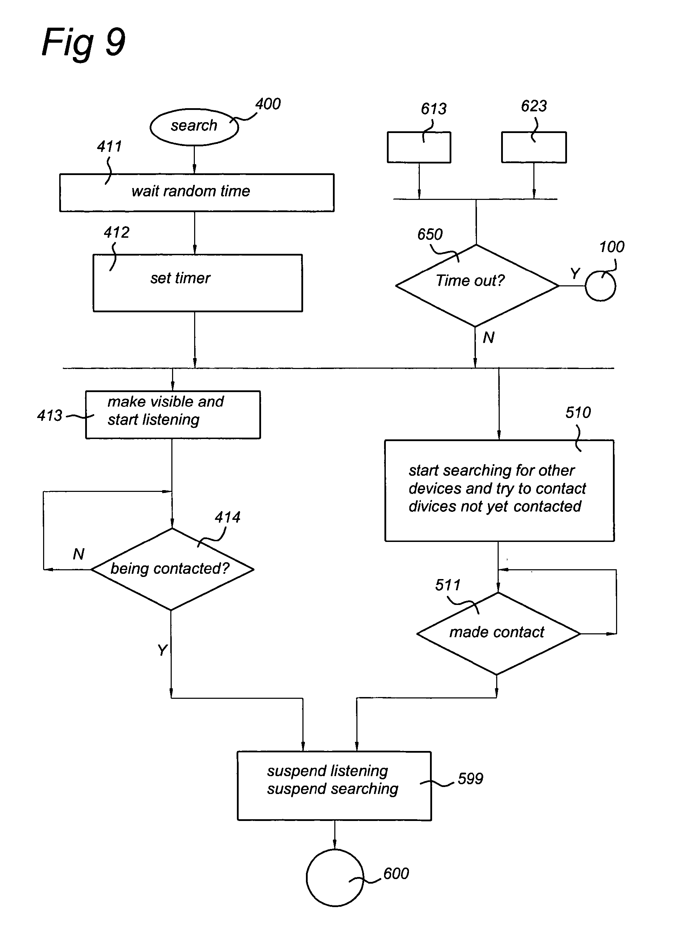

Actions 400 and 500 are explained in more detail below with reference to Fig. 9.

In a next action 600 the first mobile device 1 exchanges parts of the at least one stamp, for instance by alternately transmitting and receiving parts of the at least one stamp to and from the second mobile device 2 via the first communication channel. In action 700 the received parts are verified, i.e. compared to the corresponding parts of the stamp as determined by the first mobile device 1.

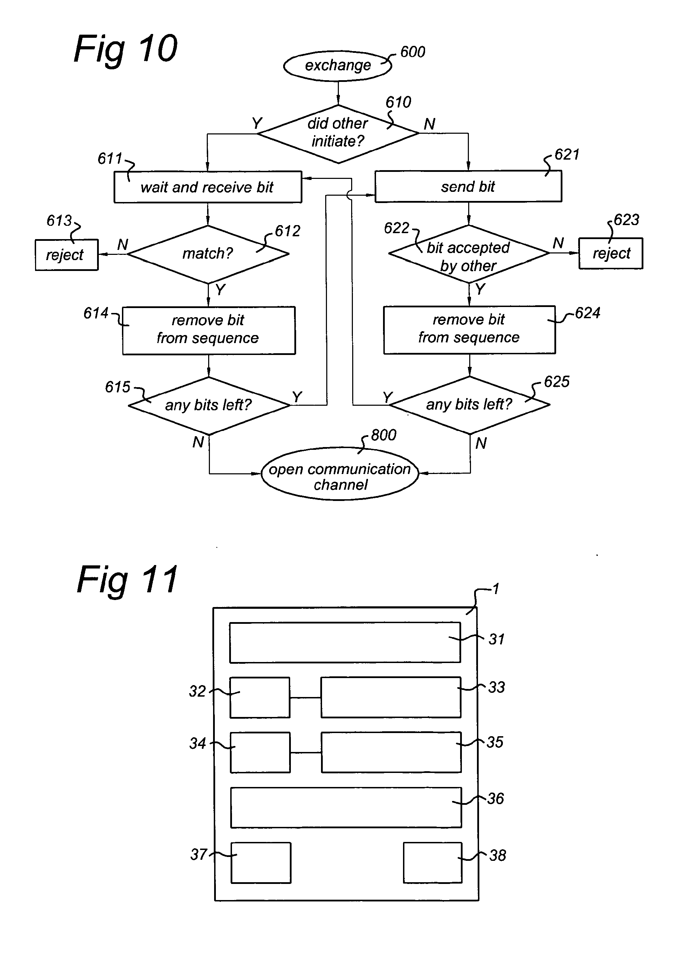

It will be understood that actions 600 and 700 may be performed in many different ways. For instance, actions 600 and 700 may be performed sequentially, wherein first all parts of the at least one stamp are exchanged (action 600) and once this is done, verification is performed (action 700). However, according to an alternative, first part of the at least one stamp is exchanged (action 600) and verified (action 700), after which a second part of the at least one stamp is exchanged (action 600) and verified (action 700), etc. An example of this will be explained in more detail below with reference to Fig. 10.

By exchanging parts of the at least one stamp, the first and second mobile device 1, 2 are arranged to verify and compare the received stamps, without completely revealing the stamp and without using a trusted third party.

According to an embodiment the least significant part of the stamp is exchanged first. In case the stamp is a time stamp, and the time stamp has a resolution of milliseconds, the least significant part of the stamp is formed by the bit or bits representing milliseconds. This ensures that a third mobile device 3 is shown up as a fraudulent third mobile device 3 as soon as possible in the process of exchanging and verification, as it will be more difficult for the third mobile device 3 to guess the milliseconds of the time stamp than to guess seconds or minutes.

Finally in action 800, the mobile device 1 is arranged to open a second communication channel between the first mobile device 1 and the second mobile device 2 if a predetermined amount of the received parts of the at least one stamp equal the corresponding parts of the at least one stamp as determined by the first mobile device 1. So, the first communication channel may be communication channel, whose scope is limited to the exchange of stamp and synchronization information according to the embodiments, whereas the second communication channel is a generic communication channel for the exchange of generic information between the mobile devices, the information exchange over the first communication channel securing sufficient authentication for the second communication channel to be established.

According to a further embodiment, the second communication channel may be used to exchange an identity between the first and second mobile device 1, 2. This identity may be a telephone number, a SIM (Subscriber Identity Module) number, a name, or another type of identity. However, in accordance with a further aspect the identity may additionally, or alternatively, represent other information, such as the state of the first and/or second mobile device 1, 2, or the state of a process or program being executed by the (processor of the) first and/or second mobile device 1, 2. This state will be referred to as the state of the first and/or second mobile device 1, 2 but generally refers to the current stage or step in a process in which the first and/or second mobile device 1, 2 is involved and which may be controlled and/or executed by the processor of the first and/or second mobile device 1, 2.

Actions 600, 700 and 800 are explained in more detail below with reference to Fig. 10.

Fig. 8 provides a more detailed flow diagram of a possible implementation of actions 100, 200 and 300 as depicted in Fig. 7. The flow diagram may be executed by the microprocessor 21 of the first mobile device 1.

It proceeds with action 210 in which it checks if a sensory identifier is detected. If no sensory identifier is detected, it returns to action 210.

If a sensory identifier is detected in action 210, it is matched to previously stored sensory identifiers to see if this really was a sensory identifier intended for identification. For instance, in case the sensory identifier is an acoustic identifier generated by tapping mobile devices 1, 2, the detected acoustic signal is compared to previously stored acoustic signals that represent such a tap to make sure the received acoustic signal is really a tap, for instance using pattern recognition techniques.

If in action 211 it is decided that the sensory identifier does not match and in fact is not a sensory identifier intended for identification, it returns to action 210. If however the sensory identifier is matched and is a sensory identifier intended for identification, a stamp is determined in a next action 310.

In action 310 a stamp is determined by extracting features from the sensory identifier that characterize the detected sensory identifier. As already explained above, the stamp may be a time stamp characterizing the time the stamp was received. The stamp may also be a fingerprint characterizing information comprised by the sensory identifier, such as an envelope, Fourier components, etc. The stamp may also be a combination of these.

In a next action 311 the stamp may be converted into a bit sequence. Of course, this action may also be comprised in action 310 or may be omitted in case the stamp is already available as a bit sequence.

In a next action 312 the bit sequence may be re-arranged such that the bit sequence starts with the least significant bit. This may be done such that actions 600 and 700 start with the least significant bit for reasons explained above.

After action 312, the flow diagram may continue with actions 400, 500 and 600, which are explained in more detail below with reference to Fig. 9.

Fig. 9 provides a more detailed flow diagram of a possible implementation of actions 400 and 500 as depicted in Fig. 7. The flow diagram may be executed by the microprocessor 21 of the first mobile device 1.

The search action 400 starts with waiting a random time. This is shown as action 411 in Fig. 9. After that, this the first communication channel of the mobile device 1 may be switched on, if it not already. Switching it on at the latest possible moment has the benefit of power saving and enhanced security.

In an action 412 a timer is set at a time out period to make sure that the process as described here stops after a certain amount of time to prevent the process from continuing too long.

Next, two action threads are performed in parallel.

The first action thread comprises actions 413 and 414. In action 413 the mobile device 1 makes it self externally visible and start listening for incoming communication. The action of making it self visible may involve making it self discoverable for other mobile devices, e.g. by sending a beacon signal. After this, in action 414, the mobile device may wait if it is being contacted, i.e. waits to be contacted. Only once being contacted the mobile device 1 proceeds to action 599 which will be explained below.

The second action thread comprises actions 510 and 511. In action 510 the mobile device 1 starts searching for other devices and tries to contact other devices that not have been contacted yet. In action 511 the mobile device waits if a contact has been made. Only once a contact has been made the mobile device 1 proceeds to action 599.

In action 599 the mobile device 1 suspends listening, i.e. suspends actions 413 and 414 and suspends searching, i.e. suspends actions 510 and 511. After action 599 the mobile device 1 continues to action 600. So, once a contact has been established by either the first or the second action thread, both threads are suspended and exchange process 600-800 is started which is explained in more detail with reference to Fig. 10.

If the process explained below with reference to Fig. 10 is not successful, it results in a reject action 613 or 623. These actions are also shown in Fig. 9.

After reject action 613 or 623 the mobile device 1 first checks if the time out period set in action 412 has lapsed. If so, the mobile device returns to action 100. If not, it continues with the two actions threads explained above. The timeout period should be sufficient to 1) cover the random waiting time 412 of the second mobile device 2, and 2) try and contact all or at least a reasonable amount of proximate mobile devices.

Also, when the time out period lapses when executing actions 413, 414 and 510, 511, these actions may be aborted and the first mobile device 1 may return to action 100.

Fig. 10 provides a more detailed flow diagram of a possible implementation of actions 600 and 700 as depicted in Fig. 7. The flow diagram may be executed by the microprocessor 21 of the first mobile device 1.

In a first action 610 it may be checked if the first mobile device 1 itself initiated the contact or if contact was initiated by the other device.

With action 610 it is avoided that the two devices involved start exchanging at the same time or remain waiting for the other device to start the exchange. Of course, action 610 could be the other way around.

In case the second mobile device 2 initiated the exchange, action 611 is executed in which the first mobile device 1 waits to receive part of the stamp from the other device.

In case the first mobile device 1 initiated the exchange, action 621 is executed as explained below.

The part of the stamp may be formed by one or more bits.

In a next action 612, the received part of the stamp is compared with the corresponding part of the stamp as determined by the first mobile device 1. If the received part matches the corresponding part of the stamp as determined by the first mobile device 1, this part is removed from the stamp in action 614 and in action 615 it is checked if there are any parts (bits) left. If so, action 621 is performed in which the first mobile device 1 transmits a next part of the stamp as determined by the first mobile device 1 to the second mobile device 2. Again the part of the stamp may be formed by one or more bits. In action 622 the first mobile device 1 checks if the part of the stamp is accepted by the second mobile device 2 and if so, this part is removed in action 624 and in action 625 it is checked if there are any parts (bits) left. If so, action 611, 612 etc. are performed.

Of course it will be understood that the removed parts or bits are kept in memory somewhere to be used in case the exchange is not successful and needs to be performed a further time with a different device.

Action 612 may comprise sending an accept message to the other device if there is a match and sending a reject message to the other device if there is no match. Accordingly, action 622 may comprise receiving an accept or reject message.

If the outcome of actions 612 or 622 is negative, i.e. there is no match in action 612 or the part of the stamp is not accepted by the second mobile device 2 in action 622 the interaction is rejected the process returns to action 650 described above with respect to Fig. 9.

If in action 615 or 625 it is determined that there are no parts (no bits) of the stamp left, this means that identification is completed successfully so action 800 can be executed, i.e. opening a second communication channel between the first mobile device 1 and the second mobile device 2.

### Security level

Based on the above description, an example is provided for determining the security level. According to this example the random waiting time is between 0 and 1000 ms. The stamp comprises a time stamp with a resolution of 1 ms. According to this example, the last 10 or 11 bits of the time stamp (1000 ms / 1 ms = 1000 ≈ 2^10) are only known by the two mobile devices 1, 2 that were tapped. As these bits are exchanged and verified alternatingly as explained with reference to Fig. 10, a third mobile device 3 (a spoofer) needs to guess at least 5 bits in a row correctly. The chance of making such a correct guess is 1:32 (32 = 2^5). It will be understood that for many purposes, such as for instance gaming or exchanging of electronic business cards, this provides a sufficient level of security.

The level of security can be further improved by increasing the maximum random waiting time.

Furthermore, the security level can be further improved by increasing the length of the stamp, for instance by
- increasing the resolution of the stamp (for instance to 0.1 ms);
- generating two stamps (for instance tapping twice ("tap-tap"));
- extracting and exchanging more aspects of the tapping sound (loudness, echoes, ...).

Also, traditional security measures may be used to further increase the level of security, such as using encryption techniques for all communication between the first and second mobile device 1, 2.

By using a first communication channel with a limited range, such as Bluetooth, the security is increased, as the number of possible fraudulent devices is thus reduced.

Also, before action 800 is executed user conformation may be required. This increases the security as the mobile device 1 can not open the second communication channel without user confirmation. This prevents accidentally opening a second communication channel.

Actions 500 - 800 may comprise showing an identification of the second mobile device 2 to the user, for instance via the display screen 13 of the mobile device 1. This further increases the security.

The first mobile device 1 may further be arranged to keep a log-file of all successful and failed attempts. Also, the first mobile device 1 may be arranged to provide a warning when an attempt to set up communication is started and/or when an attempt has failed.

The application implementing the method according to this invention may be further limited in scope, like a particular game or the exchange of business cards.

The application implementing the method according to this invention may be turned on only when applicable, e.g. for a game or at the networking part of a congress.

The application implementing the method according to this invention may have a timer that turns the application off when is has not been used for a configured amount of time.

According to a further embodiment, the method may further comprise a time synchronization action. As explained above the stamp may comprise a time stamp that is exchanged and compared with the second mobile device 2. It will be understood that this can only be done successfully when the clocks of the first and second mobile devices 1, 2 are accurate with respect to each other. In case this can not be ensured, a time synchronization action may be performed.

The time synchronization action may involve consulting a centrally broadcasted master clock such as a network clock of a provider associated with the first and second mobile device 1, 2 or using a clock of a positioning system.

According to an alternative, the time synchronization involves the first and second mobile device 1, 2 mutually synchronise their clocks. Both the first and second mobile device 1, 2 sends by radio (e.g. Bluetooth) a "now" timestamp and learns from the other device's time stamp the offset of its clock. This time synchronisation may be performed after the first and second mobile devices 1, 2 have opened the first communication channel in action 500, in order not to prematurely disclose information on the time stamp.

Figure 11 schematically depicts the first mobile device 1 from a software point of view, comprising software functions according to an embodiment. As shown in Fig. 11, the first mobile device comprises:
- a user-interface function 31 to get user input and present notifications to the user,
- a sensing function 32, such as a listening function for performing action 200.
- a sensory identifier processing function 33, such as a sound-processing function for performing action 200 to digitally process detected sound,
- a clock function 34 in case the stamp comprises a time stamp to enable accurate time stamping,
- a stamp extraction function 35, such as a time stamp extracting function, for performing action 300 to extract the time stamps from detected sound,
- a stamp-to-bit-sequence function 36, such as a time-stamp-to-bit-sequence-function, for performing action 311 to prepare for the bit-wise exchange,
- a mobile touch service logic function 37 for performing the logic involved in the embodiments described and
- a communication function 38 for performing actions 500 and - 800 e.g. Bluetooth or WiFi.

The embodiments provided here may very well be used in games, such as games wherein mobile devices interact. For instance, mobile devices may be tapped and arranged to exchange game data with each other.

It will be understood that actions 210 and 211 may also be used for other purposes, such as switching on a predetermined application of the mobile device, e.g. Bluetooth, mail reading, SMS sending, opening the address book application, voice dialling, or to perform an action within an application, such as deleting an SMS or disconnecting a connection.

According to an embodiment, there is provided a method for a first mobile device 1, comprising
a) detecting at least one sensory identifier ID1 and
   performing predetermined functionality in response to the detected sensory identifier ID 1.

The predetermined functionality may comprise performing actions b) - g) described above. The predetermined functionality may also be a communication function, such as a Bluetooth function that is switched on whenever the first mobile device 1 has detected a sensory identifier in action 200 or action 211. This provides an easy way for a user to switch on the communication function, such as Bluetooth.

According to an embodiment, the sensory identifier may comprise an acoustic (audio) identifier.

As described above, the first mobile device 1 may be arranged to detect such an acoustic identifier, for instance by using microphone 18 as described above or any other suitable button or sensor.

As will be understood based on the above, the sensory identifier may be generated by tapping the first mobile telephone. However, according to this embodiment, the first mobile device 1 may be tapped against the second mobile device 2, but may also be tapped against any other suitable object, such as a table. The tapping may be detected by using all sorts of techniques, also described above.

The first mobile telephone 1 may be arranged to distinguish between different kinds of sensory identifier. For instance, the first mobile telephone 1 may be arranged to distinguish between a single tap, a double tap, a triple tap, a soft tap, a firm tap and taps on or with different parts of the first mobile telephone 1. For this last option, the first mobile device 1 may comprise percussion elements or tuning forks (tonometer) that may cooperate with the microphone to determine which part of the first mobile device 1 was tapped.

Different sensory identifiers may be used to switch on different applications.

For instance, a single tap may be used to switch on Bluetooth, where a double tap may be used to perform actions b) - g) described above.

According to a further embodiment, there is provided a mobile device according to perform any one of the methods described above. It will be understood that this may be any kind of suitable computer device as explained above. The mobile device may be arranged to produce at least one sensory identifier. Also, the mobile device may comprise a clock or may have access to a network clock of a provider associated with the first mobile device 1 or positioning system to generate clock information.

The mobile device may comprise at least one of: an acceleration measurement device, a microphone, a button, galvanic sensor, magnetic sensor, inductive sensor, electrostatic sensor to detect a sensory identifier, e.g. being a tap.

Furthermore there is provided a system comprising at least two mobile devices 1, 2 according to the above.

Furthermore there is provided a computer program loadable into a processing unit of a mobile device, the computer program comprising portions of software code adapted to perform any one of the methods above.

Furthermore there is provided a computer-readable medium product comprising such a computer program.

It will be understood by those skilled in the art that the present invention is not limited to the embodiments illustrated above and that many modifications and additions may be made without departing from the scope of the invention as defined in the appending claims.

## Claims

1. Method for a first mobile device (1), comprising
a) detecting at least one sensory identifier (ID1) and
performing predetermined functionality in response to the detected sensory identifier (ID1).

2. Method according to claim 1, wherein the sensory identifier is one of an acoustic identifier and a visual identifier.

3. Method according to any one of the claims 1 - 2, wherein the sensory identifier is generated by tapping the first mobile telephone (1) to a suitable object.

4. Method according to claim 1 to identify a second mobile device (2), the method comprising:
a) detecting at least one sensory identifier (ID1),
b) determining a stamp for each detected sensory identifier (ID1),
c) searching for a second mobile device (2) via a first communication channel and when found,
d) opening a first communication channel with the second mobile device 2,
e) exchange parts of the at least one stamp with the second mobile device (2) via the first communication channel,
f) verifying if received parts of the at least one stamp equal the corresponding parts of the at least one stamp as determined by the first mobile device (1), and
g) opening a second communication channel between the first mobile device 1 and the second mobile device (2) if a predetermined amount of the received parts of the at least one stamp equal the corresponding parts of the at least one stamp as determined by the first mobile device (1).

5. Method according to claim 4, wherein the second mobile device (2) is a proximate mobile device.

6. Method according to any one of the claims 4 - 5, wherein the at least one sensory identifier is produced by the first mobile device (1).

7. Method according to any one of the claims 4 - 6, wherein the stamp comprises a time stamp based on a time the at least one sensory identifier (ID1) is detected.

8. Method according to any one of the claims 4 - 7, wherein the time stamp is determined by using clock information from at least one of: clock of the first mobile device (1), network clock of a provider associated with the first mobile device (1), positioning system.

9. Method according to any one of the claims 4 - 8, wherein the sensory identifier comprises an acoustic (audio) identifier.

10. Method according to any one of the claims 4 - 9, wherein the sensory identifier is generated by tapping the first mobile telephone (1) and the second mobile telephone (2) to each other.

11. Method according to claim 10, wherein the sensory identifier is detected using at least one of the following techniques: an acceleration measurement device, a microphone, a button, galvanic sensor, magnetic sensor, inductive sensor, electrostatic sensor.

12. Method according to any one of the claims 4 - 11, wherein the sensory identifier comprises a visual identifier.

13. Method according to any one of the claims 4 - 12, wherein the stamp comprises fingerprint information of the sensory identifier.

14. Method according to any one of the claims 4 -13, wherein the sensory identifier is an acoustic identifier and the stamp comprises an acoustic fingerprint.

15. Method according to any one of the claims 4 - 14, wherein sensory identifier is a visual identifier and the stamp comprises a visual fingerprint.

16. Method according to any one of the claims 4 - 15, wherein the first communication channel is a direct communication channel, e.g. a radio communication channel based on Bluetooth or computer-to-computer wifi technology.

17. Method according to any one of the claims 4 - 16, wherein actions c) or d) comprises waiting a random time.

18. Method according to any one of the claims 4 - 17, wherein action e) comprises exchanging the least significant part of the stamp first.

19. Method according to any one of the claims 4 - 18, further comprising performing a time synchronization action.

20. Mobile device adapted to perform the method according to any of the claims 1-19.

21. Mobile device according to claim 20, wherein the mobile device is arranged to produce at least one sensory identifier.

22. Mobile device according to any one of the claims 20 - 21, the mobile device comprises a clock or has acces to a network clock of a provider associated with the first mobile device (1) or positioning system to generate clock information.

23. Mobile device according to any one of the claims 20 - 22, comprising at least one of: an acceleration measurement device, a microphone, a button, galvanic sensor, magnetic sensor, inductive sensor, electrostatic sensor to detect a sensory identifier.

24. System comprising at least two mobile devices (1, 2) according to any one of the claims 20 - 23.

25. Computer program loadable into a processing unit of a mobile device, the computer program comprising portions of software code adapted to perform the method according to any of the claims 1 - 19.

26. Computer-readable medium product comprising a computer program according to claim 25.
